Europäisches Patentamt

European Patent Office

Office européen des brevets

(19)

(11) Publication number: **0 198 155**
A1

# (12) EUROPEAN PATENT APPLICATION

(21) Application number: **86100726.8**

(22) Date of filing: **21.01.86**

(51) Int. Cl.⁴: **A 01 D 34/82, E 01 H 5/04**

(30) Priority: **12.04.85 IT 8335785**

(43) Date of publication of application: **22.10.86**
**Bulletin 86/43**

(84) Designated Contracting States: **AT BE CH DE FR GB LI LU NL SE**

(71) Applicant: **Munini, Dino, Via Marconi 9, I-33080 S. Quirno (Pordenone) (IT)**

(72) Inventor: **Munini, Dino, Via Marconi 9, I-33080 S. Quirno (Pordenone) (IT)**

(74) Representative: **D'Agostini, Giovanni, Dr., n. 17 via G.Giusti, I-33100 Udine (IT)**

(54) **Lawnmover-snowblower.**

(57) Snowblower-lawn mower consisting of a lawn mower on wheels (1, 1') utilizing a traditional I.C. Engine device (m) with rotational means to cut the grass rotating downwards on a horizontal plane (4), characterized in that it can be disassembled and rotated in order to rotate it, when necessary, of about 90°, with a cutting rotational device frontally positioned forwards (7) in order to enable it to work also as Snowblower.

ACTORUM AG

Snowblower-lawnmover.

This invention relates to a Snowblower-lawnmover.

According to the prior art, solutions of single lawn mowers and single snowblowers are already known.

The drawbacks resulting from said solutions relate to the maintenance of gardens and both of main and side streets together with roads close to private houses in places with cold winters and frequent snowfalls.

Infact in such places in order to have the lawns mowed in summer and the drives and other utilization areas cleared from the snow in winter, two specific means are to be employed, one to perform the first task (lawn mower), and the other to perform the second task (snowblower).

This invention is intended to provide a remedy to the above-mentioned drawbacks. It solves the problem providing a lawn mower which can be turned into a snowblower by replacing and using some specific fittings. This is possible by employing an engine lawn mower which works as a real lawn mower if normally positioned and which works as a snowblower if rotated by 90°; moreover, by means of an additional ground supporting carriage, a propeller fan, which replaces the lawn mower blade, and the work and control blade and different fittings, it works as a snowblower.

In the case of an internal combustion engine (I.C.Engine), both the tank and the carburettor are palced in a tilted position between the vertical and horizontal axis so that in either working positions the former normally supplies and prevents the leakage of fuel and the latter can always keep the normal expected performance.

This is possible by inclining of about 45° the respective fuel filler and the working axis of the respective carburettor.

This solution provides great advantages, namely a single means, suitably fitted, can successfully perform the two single and different operations.

The invention will be now described in more detail with reference to the accompanying drawings which illustrate a preferred embodiment, in which:

Figure 1 is a side view of a snowblower-lawnmover designed according to this invention, in its working condition as "lawn mower";

Figure 2 is a side view of a snowblower-lawnmover illustrated in fig. 1, rotated by 90° in its working condition as "snowblower" and, therefore, equipped with all the fittings necessary to be turned into a snowblower;

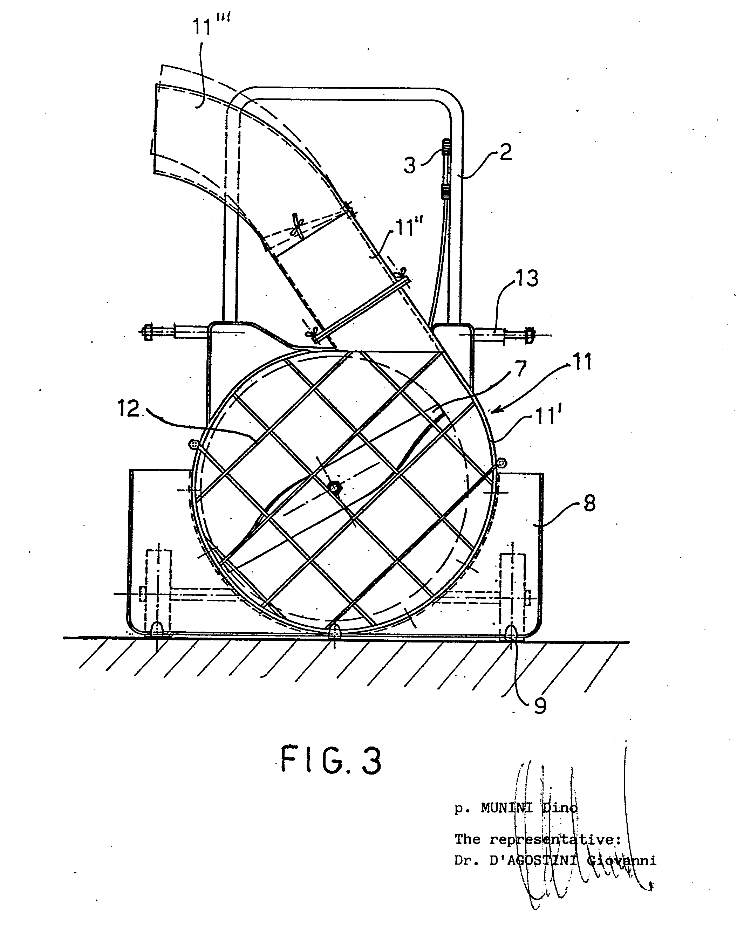

Figure 3 is a front view of a snowblower-lawnmover in its working condition as "snowblower", as illustrated in fig. 2;

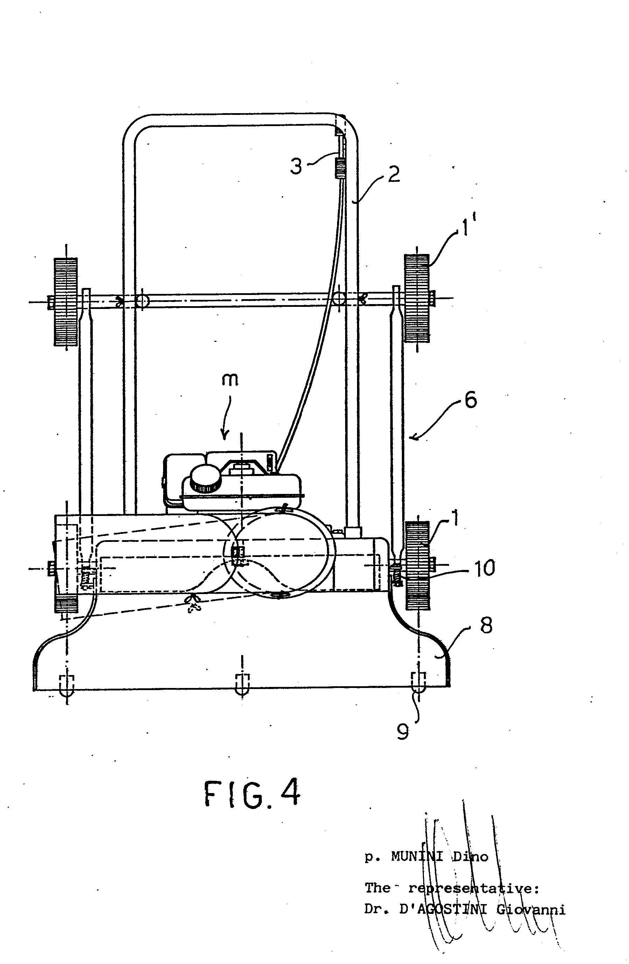

Figure 4 is a top view of the same snowblower-lawnmover in its working condition as "snowblower" as illustrated in figures 2,3.

This invention, as represented in said figures, consists of a traditional I.C.Engine lawn mower (m), with four wheels; two front (1) and two back (1') ones, a sliding handlebar (2), with respective commands (3). The lawnmover comprises a lawn mower blade, set in operation by the engine (m) and of a grass-collector device (5).

The I.C.Engine (m) is characterized in that it has the tank (s) filler (b), and the carburettor in an angle position of approx 45°.

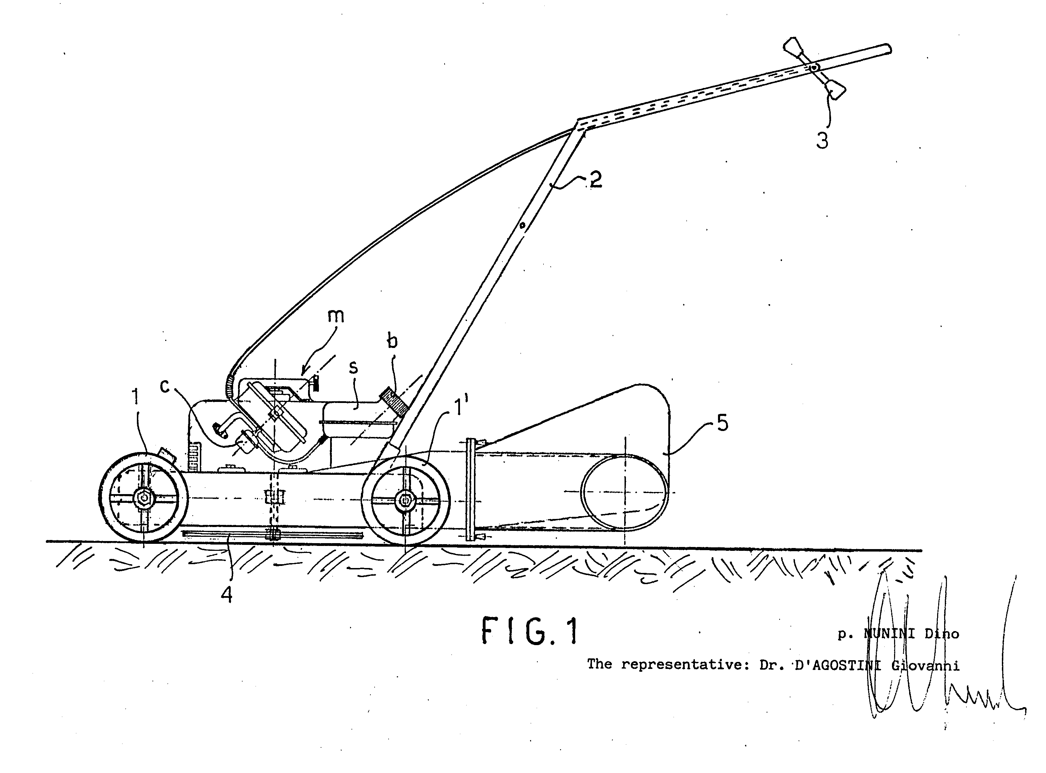

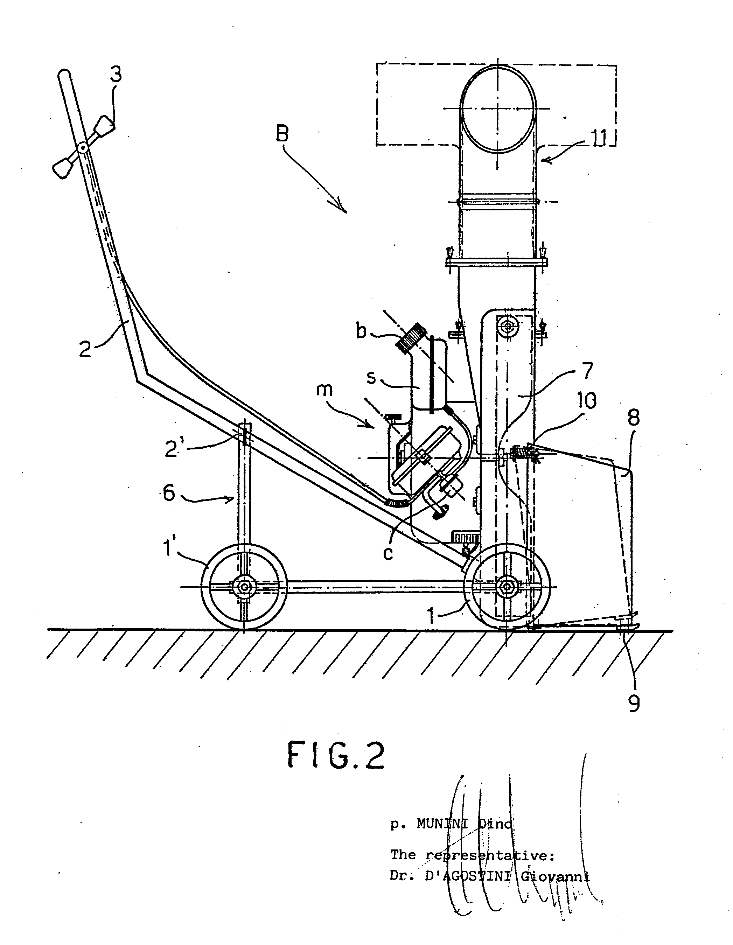

However, it is placed in such a way that it always secures the normal and constant refuelling both in the normal position as a lawn mower (horizontal position, fig. 1), and in the upsidedown position of 90° to be employed as snowblower (vertical position, fig. 2).

The conversion of the lawn mower into a snowblower can be made as follows:

1. sliding of the handlebar from the normal back fixing-in position to a fixing-in position facing the engine;

2. employment of a carriage structure (6) possibly equipped with two back wheels (1'), removed from the back axle (13), and fixed on one side to the front wheel hub (1), and on the other (2'), to the handlebar (2);

3. rotation by 90° of the lawn mower to enable the wheels (1') of carriage structure (6) to lean on the ground;

4. possible replacement of the lawn mower blade (4) with a propeller fan (7), (to increase the performance);

5. emplyment of a small conveyor box with a snow-collector "blade" equipped with sled means to enable the guide at the same level of the ground and shock absorber springs (10);

6. replacement of the grass-collector device (5) with a snow-conveyor-discharge device (11) made of a conveyor piping with side snow discharge (11''), whose outlet (11" ') is angularly adjustable both vertically and circularly, and frontly made of a screen grid shielding the propeller (12). In this way the snow gathered and conveyed by the "blade" (8) towards the container (11') is sucked in by the propeller (7), whose rotation conveys it to the discharge piping (11").

0198155

claims:

1. A Snowblower-lawnmover consisting of a lawn mower on wheels (1, 1') utilizing a traditional I.C.Engine device (m) with rotational means to cut the grass rotating downwards on a horizontal plane (4), characterized in that it can be disassembled and rotated in order to rotate it, when necessary, of about 90° in vertical direction with a cutting rotational device frontally positioned forwards in order to enable it to work also as snouwblower.

2. Snowblower-lawnmover according to claim 1, characterized in that it is equipped with a grass-collector device (5) which can be replaced by a snow-conveyor device (11).

3. Snowblower-lawnmover according to claim 1., characterized in that the respective carburettor (c) and the fuel tank (s) of the respective I.C.Engine (m), are structured and arranged in order to deliver the fuel both in the working horizontal position (lawn mower) and in the vertical position (snowblower).

4. Snowblower-lawnmover according to claim 1., characterized in that it comprises a fuel filler (b) to the tank (s) realized inclined of about 45° off the vertical position on the right side if the rotation for the change of function of the machine is counterclockwise or on the left side if said rotation is clockwise.

5. Snowblower-lawnmover according to claim claim 1., characterized in that it is equipped with two positions orientable handlebar (2), said handlebar enclosing the respective I.C.Engine commands.

6. Snowblower-lawnmover according to claim 1., characterized in that it is fitted with four wheels being the respective two back wheels (1') changeable in position in order to change the function from Snowblower to Lawnmower.

7. Snowblower-lawnmover according to claim 1., characterized in that it is equipped with a back detachable supporting carriage (6) in the condition of Snowblower, being the structure of the carriage frame (6) fixable on one side to the front wheel hub (1) and, on the other side, to the handlebar (2), or to the back wheel hub.

8. Snowblower-lawnmover according to claim 1., characterized in that the rotational grass-cutting device (4) is replaceable with a rotational suction and snow-conveyor device (7).

9. Snowblower-lawnmover according to claim 1., characterized in that it is equipped with snow-conveyor shovel means (8) which can be frontally fixed to a suction and snow-conveyor rotational device (7), being the snow-conveior shovel means (8) fitted with a shock absorber system placed upwards (10).

10. Snowblower-lawn mower according to claim 1., characterized in that it is equipped with grass-collecting means (5) placed behind the grass-cutting operational device (4), which can be in turn replaced with snow-conveyor means (11), being said snow conveyor means (11) equipped with helical propeller and a snow piping conveyor discharger means (11"), whose outlet (11"') is orientable.

0198155

FIG.1

p. NUNINI Dino

The representative: Dr. D'AGOSTINI Giovanni

FIG.2

p. MUNINI Dino

The representative:
Dr. D'AGOSTINI Giovanni

**FIG. 3**

p. MUNINI Dino

The representative:
Dr. D'AGOSTINI Giovanni

0198155

FIG.4

p. MUNINI Dino

The representative:
Dr. D'AGOSTINI Giovanni

0198155

European Patent
Office

**EUROPEAN SEARCH REPORT**

Application number

EP 86 10 0726

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-6 601 858 (POPP)<br><br>* Page 1; page 2, last paragraph - page 4, paragraph 3; claims 1,2,3,4,5,8 * | 1,2,3, 4,5,7, 8,9,10 | A 01 D 34/82<br>E 01 H 5/04 |
| A | | 6 | |
| | --- | | |
| X | FR-A-1 407 521 (SURDI)<br>* Whole document * | 1,3 | |
| A | | 4,5,6, 9 | |
| | --- | | |
| X | US-A-2 675 660 (BARNARD)<br>* Column 3, line 27 - column 4, line 18 * | 1,8 | TECHNICAL FIELDS SEARCHED (Int. Cl.4) |
| A | | 10 | A 01 D |
| | --- | | |
| X | US-A-3 673 776 (SMITH)<br>* Whole document * | 1,8 | |
| | --- | | |
| A | US-A-3 035 359 (EWERT)<br><br>* Whole document * | 2,8,9, 10 | |
| | ---     -/- | | |

The present search report has been drawn up for all claims

| Place of search | Date of completion of the search | Examiner |
|---|---|---|
| THE HAGUE | 26-06-1986 | DE LAMEILLIEURE D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82

**European Patent Office**

**EUROPEAN SEARCH REPORT**

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | AU-B- 457 851 (THOMPSON) <br> * Page 19, lines 6-10 * <br><br> --- | 10 | |
| A | US-A-3 131 491 (DURRSCHMIDT) <br><br> --- | | |
| A | US-A-3 373 514 (FORREN) <br><br> --- | | |
| A | US-A-4 217 708 (PRENATT) <br><br> ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 26-06-1986 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82